# EUROPEAN PATENT APPLICATION

(11) **EP 3 843 184 A1**
(43) Date of publication of application: **30.06.2021**
(21) Application number: 19852725.1
(22) Date of filing: 22.08.2019
(51) Int. Cl.: H01M 4/86, H01M 8/10, H01M 8/1004

(54) **MEMBRANE ELECTRODE ASSEMBLY**

(30) Priority: 23.08.2018 JP 2018156609
(71) Applicant: Toppan Printing Co., Ltd., Tokyo 110-0016 (JP)
(72) Inventor: SUZUKI ,Yutaka, Tokyo 110-0016 (JP)
(74) Representative: Hoffmann Eitle
(86) International application number: PCT/JP2019/032878
(87) International publication number: WO 2020/040260

(57) **Abstract**

A membrane electrode assembly for a polymer electrolyte fuel cell including catalyst layers with improved flexibility is provided. A membrane electrode assembly (12) according to the present embodiment in which a polymer electrolyte membrane (1) is sandwiched between an anode-side catalyst layer (3) and a cathode-side catalyst layer (2) each of which includes carbon particles (14) supporting catalyst particles (13), a polymer electrolyte (15), and fibrous substances (16). A difference between maximum lengths of cracks (19) formed in the catalyst layers (2, 3) of the membrane electrode assembly (12) before and after a bending test is 1200 µm or less.

## Description

### [Technical Field]

The present invention relates to a membrane electrode assembly.

### [Background Art]

In recent years, fuel cells have been attracting attention as an effective solution to environmental problems and energy issues. Fuel cells oxidize fuel such as hydrogen using an oxidizing agent such as oxygen and convert chemical energy involved in the oxidization into electrical energy.

The fuel cells are classified into alkaline, phosphoric acid, polymer, molten carbonate, and solid-oxide types depending on the kind of electrolyte. Since a polymer electrolyte fuel cell (PEFC) operates at low temperatures, has a high power density, and is reduced in size and weight, the polymer electrolyte fuel cell is expected to be applied to a portable power supply, a domestic power supply, and a vehicle-mounted power supply.

The polymer electrolyte fuel cell (PEFC) includes an electrolyte membrane, specifically, a polymer electrolyte membrane sandwiched between a fuel electrode (anode) and an air electrode (cathode). A fuel gas containing hydrogen is supplied to the fuel electrode, and an oxidant gas containing oxygen is supplied to the air electrode to generate electric power by an electrochemical reaction as follows.
Anode:

   H₂ → 2H⁺ + 2e⁻ ... (1)
Cathode:

   1/2 O₂ + 2H⁺ + 2e⁻ → H₂O ... (2)

The anode and the cathode each include a catalyst layer and a gas diffusion layer laminated on each other. The fuel gas supplied to an anode-side catalyst layer is converted to protons and electrons by an electrode catalyst (reaction 1). The protons pass through a polymer electrolyte in the anode-side catalyst layer and the polymer electrolyte membrane and migrate to the cathode. The electrons pass through an external circuit and migrate to the cathode. In the cathode-side catalyst layer, the protons, the electrons, and the oxidant gas supplied from outside react and generate water (reaction 2). Thus, as electrons migrate through an external circuit, electric power is generated.

Applications of fuel cells include mounting on automobiles as a vehicle-mounted power supply. Since use under various environments is expected in applications on a vehicle, the membrane electrode assembly desirably has high mechanical durability. A technique for improving the mechanical durability of the membrane electrode assembly is disclosed in, for example, PTL 1.

PTL 1 proposes an electrolyte membrane that has a high fracture strength and resists rupture of the membrane even under an environment where humidification, which causes swelling, and drying, which causes contraction, are repeated.

### [Citation List]

### [Patent Literature]

PTL 1: WO 2018/061838

### [Summary of the Invention]

### [Technical Problem]

Other approaches to improving the mechanical durability include improving the flexibility of the electrolyte membrane and the catalyst layers. For example, when the fuel cell is used for the application on a vehicle, the fuel cell is exposed to an environment where vibration occurs continuously. If the mechanical strength is low, the fuel cell is likely to be damaged due to the vibration of the vehicle. That is, the membrane electrode assembly desirably resists damage even if a load is applied due to vibration. Flexibility is required to achieve such a membrane electrode assembly.

However, PTL 1 does not sufficiently verify the flexibility of the catalyst layers, and the durability of the membrane electrode assembly cannot be said to be sufficient.

The present invention has been accomplished in view of the above circumstances and aims at providing a membrane electrode assembly for a polymer electrolyte fuel cell in which the flexibility of catalyst layers is improved to enhance the durability of the membrane electrode assembly.

### [Solution to Problem]

To solve the above problems, one aspect of the present invention provides a membrane electrode assembly for a polymer electrolyte fuel cell in which a proton-conducting polymer electrolyte membrane is sandwiched between an anode-side catalyst layer and a cathode-side catalyst layer each of which includes carbon particles supporting catalyst particles, a polymer electrolyte, and fibrous substances. The membrane electrode assembly is characterized in that a difference between maximum lengths of cracks formed in the catalyst layers before and after a bending test is 1200 µm or less.

### [Advantageous Effects of the Invention]

According to one aspect of the present invention, a membrane electrode assembly for a polymer electrolyte fuel cell including catalyst layers with improved flexibility is provided. More specifically, according to one aspect of the present invention, since the flexibility is added to the membrane electrode assembly, the durability of the membrane electrode assembly is maintained even under an environment in which vibration occurs. Thus, a membrane electrode assembly for a polymer electrolyte fuel cell with high durability is provided.

### [Brief Description of the Drawings]

Fig. 1 is a schematic diagram illustrating an example configuration of a catalyst layer according to an embodiment of the present invention.
Fig. 2 is a schematic cross-sectional diagram illustrating an example configuration of a membrane electrode assembly according to the embodiment of the present invention.
Fig. 3 is a schematic diagram illustrating an example method of a bending test on the membrane electrode assembly according to the embodiment of the present invention.
Fig. 4 is a schematic diagram illustrating an example of a micrograph of the membrane electrode assembly according to the embodiment of the present invention taken after the bending test.
Fig. 5 is an exploded perspective view of an example configuration of a single cell of a polymer electrolyte fuel cell provided with the membrane electrode assembly according to the embodiment of the present invention.
Fig. 6 is a micrograph of a membrane electrode assembly according to Example 1 of the present invention taken after the bending test.
Fig. 7 is a micrograph of the membrane electrode assembly according to Example 19 of the present invention taken after the bending test.
Fig. 8 is a micrograph of the membrane electrode assembly according to Comparative Example 5 of the present invention taken after the bending test.

### [Description of the Embodiment]

Embodiments of the present invention will be described in detail below with reference to the drawings. It should be noted that the present invention is not limited to the following embodiments. Design modifications can be made on the basis of the knowledge of a person skilled in the art, and such modifications are also included in the scope of the present invention.

### (Structures of Catalyst Layers, Membrane Electrode Assembly, and Single Cell)

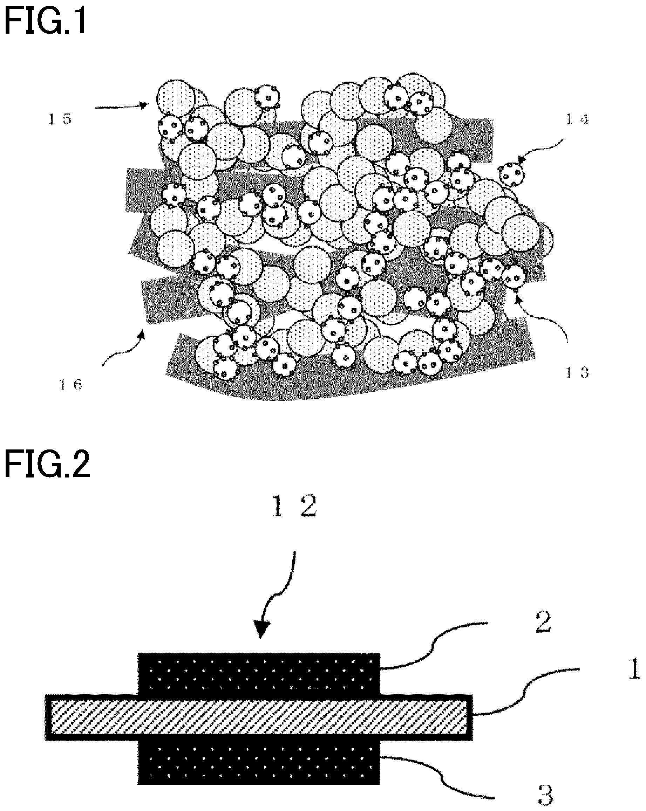

As shown in Fig. 1, catalyst layers for a polymer electrolyte fuel cell according to an embodiment of the present invention (hereinafter, referred to as the present embodiment), that is, an anode-side catalyst layer and a cathode-side catalyst layer, each include carbon particles 14 which support catalyst particles 13, a polymer electrolyte 15, and fibrous substances 16. Including the fibrous substances 16 prevents cracks from being formed during formation of the catalyst layers and also increases the number of pores in the catalyst layers.

As shown in Fig. 2, a membrane electrode assembly 12 for the polymer electrolyte fuel cell according to the present embodiment is configured by a proton-conducting polymer electrolyte membrane 1 being sandwiched between the anode-side catalyst layer 3 (hereinafter, simply referred to as the catalyst layer 3) and the cathode-side catalyst layer 2 (hereinafter, simply referred to as the catalyst layer 2).

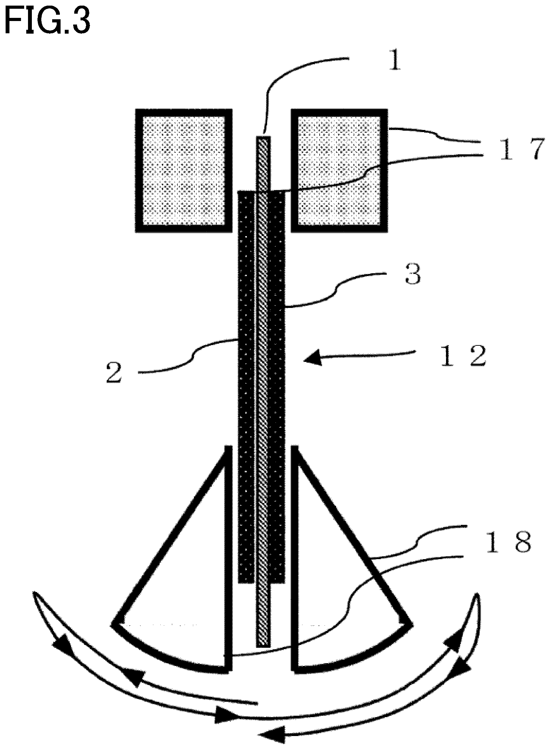

As shown in Fig. 3, a bending test of the present embodiment includes securing one end of the membrane electrode assembly 12 to a spring-loaded clamp 17, securing the other end to a bending clamp 18, and moving the bending clamp 18.

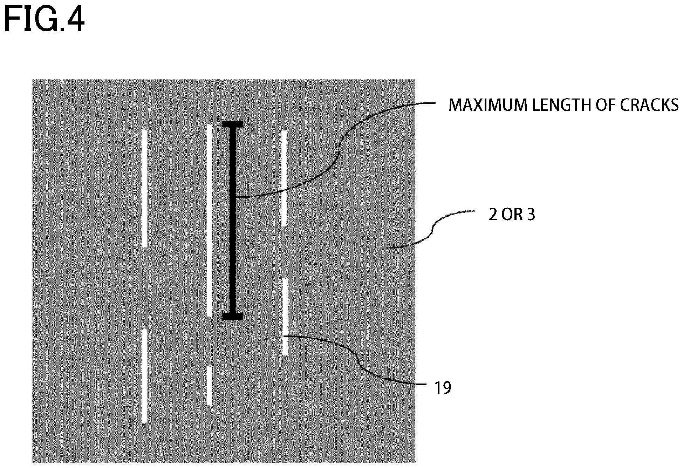

As shown in Fig. 4, cracks 19 formed on the surface of the catalyst layer 2 or the catalyst layer 3 were observed with an optical microscope or a scanning electron microscope, and the length of the longest crack 19 was referred to as the "maximum length of the cracks". The cracks 19 were defined as those having a crack width of 0.5 µm or more.

The difference between the maximum length of the cracks 19 formed in at least one of the catalyst layer 2 and the catalyst layer 3, which constitute the membrane electrode assembly 12 according to the present embodiment, after the above bending test, and the maximum length of the cracks 19 that exist on at least one of the catalyst layer 2 and the catalyst layer 3 before the bending test, is 1200 µm or less. That is, the difference between the maximum length of the cracks 19 formed on at least one of the catalyst layer 2 and the catalyst layer 3 of the membrane electrode assembly 12 after the bending test and the maximum length of the cracks 19 that exist on at least one of the catalyst layer 2 and the catalyst layer 3 before the bending test is 1200 µm or less.

The maximum length of the cracks 19 formed on at least one of the catalyst layer 2 and the catalyst layer 3 of the membrane electrode assembly 12 after the bending test may be 1500 µm or less.

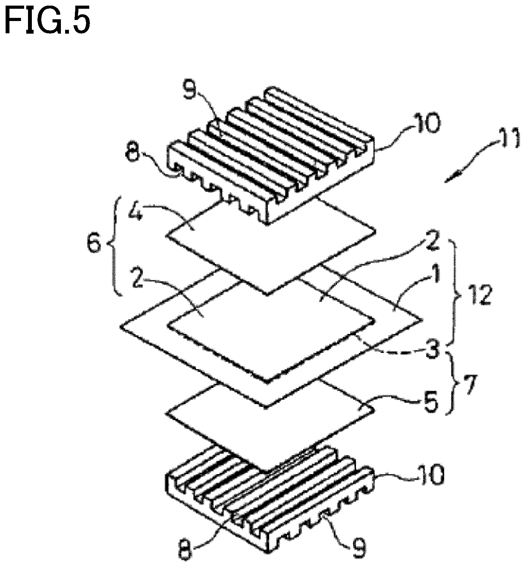

Fig. 5 is an exploded perspective view of an example configuration of a single cell 11 of the polymer electrolyte fuel cell that includes the membrane electrode assembly 12. As shown in Fig. 5, the cathode-side catalyst layer 2 and the anode-side catalyst layer 3 of the membrane electrode assembly 12 respectively face a cathode-side gas diffusion layer 4 (hereinafter, simply referred to as the "gas diffusion layer 4") and an anode-side gas diffusion layer 5 (hereinafter, simply referred to as the "gas diffusion layer 5"). This forms a cathode 6 and an anode 7. The cathode 6 and the anode 7 are sandwiched between a set of separators 10 to form the single cell 11. The set of separators 10 are formed of a conductive and gas impermeable material and each include gas flow passages 8 and coolant flow passages 9. The gas flow passages 8 face the cathode-side gas diffusion layer 4 or the anode-side gas diffusion layer 5 and permit a reaction gas to flow. The coolant flow passages 9 are formed on the main surfaces on the other side from the gas flow passages 8 and permit a coolant to flow.

The single cell 11 generates electric power by supplying an oxidizing agent such as air or oxygen to the cathode 6 through the gas flow passages 8 of one of the separators 10 and supplying a fuel gas containing hydrogen or an organic fuel to the anode 7 through the gas flow passages 8 of the other separator 10.

The polymer electrolyte membrane 1 is formed of, for example, a high molecular weight material having proton conductivity. Examples of the high molecular weight material having proton conductivity include fluororesin films and hydrocarbon resins. Examples of the fluororesin films include Nafion (manufactured by DuPont, registered trademark), Flemion (manufactured by Asahi Glass Co., Ltd, registered trademark), and Gore-Select (manufactured by Gore, registered trademark). Examples of the hydrocarbon resins include engineering plastics and those obtained by introducing sulfonate groups into copolymers of engineering plastics. Among them, a polymer electrolyte membrane 1 having a high Young's modulus is preferred. The higher the Young's modulus of the polymer electrolyte membrane 1 is, the less likely the size of the polymer electrolyte membrane is to be changed when a load is applied. Thus, cracks become less likely to be formed on the cathode-side catalyst layer 2 and the anode-side catalyst layer 3, which are on the polymer electrolyte membrane 1.

The polymer electrolyte 15 is, for example, a polymer substance having proton conductivity. Examples of the polymer substance having proton conductivity include fluororesin films and hydrocarbon resins. Examples of the fluororesin films include Nafion (manufactured by DuPont, registered trademark). Examples of the hydrocarbon resins include engineering plastics and those obtained by introducing sulfonate groups into copolymers of engineering plastics.

The dry mass value (equivalent weight; EW) of the polymer electrolyte 15 per mole of a proton-donating group is preferably in the range of 400 or more and 1200 or less, more preferably in the range of 600 or more and 1000 or less. An excessively small EW may deteriorate the power generation performance due to flooding, and an excessively large EW decreases the proton conductivity, which may deteriorate the power generation performance.

Examples of the catalyst particles 13 include: platinum group elements such as platinum, palladium, ruthenium, iridium, rhodium, and osmium; metals such as iron, lead, copper, chromium, cobalt, nickel, manganese, vanadium, molybdenum, gallium, and aluminum; and alloys thereof, oxides thereof, or composite oxides thereof. Of these materials, platinum or a platinum alloy is preferred. The above catalyst particles are preferred since elution of metal during a reaction is unlikely to occur, and the overvoltage of the reaction is low.

The catalyst particles 13 are preferred to have a particle size within the range of 0.5 nm or more and 20 nm or less, and more preferably within the range of 1 nm or more and 5 nm or less. This is because an excessively large particle size will reduce the activity of the catalyst particles 13, and an excessively small particle size will reduce the stability of the catalyst particles 13.

Any carbon particles may be used for the carbon particles 14 as long as they are microparticles and electrically conductive, and are not affected by the catalyst particles 13. An excessively small particle size of the carbon particles 14 will hinder formation of electron conduction paths, and an excessively large particle size will increase the thickness of the catalyst layer 2 or 3, which may lead to an increase in the resistance and thus to a deterioration in the output characteristics. For this reason, the average particle size of the carbon particles 14 is preferred to be within the range of 10 nm or more and 1,000 nm or less, and more preferably in the range of 10 nm or more and 100 nm or less.

The carbon particles 14 are preferred to support the catalyst particles 13. Since the carbon particles 14 having a high surface area support the catalyst particles 13, the catalyst particles 13 are supported at a high density, so that the catalytic activity is improved.

The mass ratio (polymer electrolyte (I)/carbon particles (C)) of the polymer electrolyte 15 to the carbon particles 14 contained in the anode-side catalyst layer 3 is preferably in the range of 0.5 or more and 1.5 or less, more preferably in the range of 0.7 or more and 1.2 or less. An excessively small mass ratio may decrease the proton diffusion rate, resulting in a deterioration in the power generation performance, or may decrease the flexibility due to the small amount of the polymer component. An excessively large mass ratio may deteriorate the power generation performance due to flooding. Since the polymer electrolyte 15 repeats swelling and contraction due to the difference in the dry and wet conditions during power generation, a large mass ratio I/C may cause the flexibility to become uneven during of power generation.

The mass ratio (polymer electrolyte (I)/carbon particles (C)) of the polymer electrolyte 15 to the carbon particles 14 contained in the cathode-side catalyst layer 2 is preferably in the range of 0.4 or more and 1.8 or less, more preferably in the range of 0.5 or more and 1.3 or less. An excessively small mass ratio may decrease the proton diffusion rate, resulting in a deterioration in the power generation performance, or may decrease the flexibility due to the small amount of the polymer component. An excessively large mass ratio may deteriorate the power generation performance due to flooding, or cause the flexibility to become uneven during power generation.

Examples of the fibrous substances 16 include carbon fibers, carbon nanofibers, carbon nanotubes, cellulose nanofibers, chitin nanofibers, chitosan nanofibers, and polymer electrolyte fibers. Carbon nanofibers or carbon nanotubes are preferably used. Selecting the above-described fibrous substances enables inhibition of increase in the electron transfer resistance in the catalyst layer.

The fibrous substances 16 may be an electrode active material for an oxygen-reducing electrode processed into a fibrous form. Examples of the fibrous substances 16 may include substances containing at least one transition metal element selected from Ta, Nb, Ti, and Zr. Examples of the material include a partial oxide of a carbonitride of these transition metal elements, a conductive oxide of these transition metal elements, and a conductive oxynitride of these transition metal elements.

The fibrous substances 16 according to the present embodiment may be a polymer electrolyte having proton conductivity processed into a fibrous form. Examples of the fibrous substances 16 include fluorine polymer electrolytes and hydrocarbon polymer electrolytes. Examples of the fluorine polymer electrolytes include, for example, Nafion (registered trademark) manufactured by Du Pont, Flemion (registered trademark) manufactured by Asahi Glass Co., Ltd, Aciplex (registered trademark) manufactured by Asahi Kasei Corporation, and Gore-Select (registered trademark) manufactured by Gore. Examples of the hydrocarbon polymer electrolytes include electrolytes such as sulfonated polyether ketones, sulfonated polyether sulfones, sulfonated polyether ether sulfones, sulfonated polysulfides, and sulfonated polyphenylenes. Particularly, as a polymer electrolyte, DuPont's Nafion (registered trademark) materials can be preferably used. Examples of the hydrocarbon polymer electrolytes include electrolytes such as sulfonated polyether ketones, sulfonated polyether sulfones, sulfonated polyether ether sulfones, sulfonated polysulfides, and sulfonated polyphenylenes.

The fiber diameter of the fibrous substances 16 is preferably in the range of 0.5 nm or more and 500 nm or less, and more preferably in the range of 10 nm or more and 300 nm or less. A diameter in the above range may increase the number of pores in the catalyst layers 2 and 3 and may achieve high output performance.

The fiber length of the fibrous substances 16 is preferably in the range of 1 µm or more and 200 µm or less, and more preferably in the range of 1 µm or more and 50 µm or less. A length in the above range may increase the strength (flexibility) of the catalyst layers 2 and 3 and may minimize the occurrence of the cracks 19 when these layers are formed or after the bending test. A length in the above range may also increase the number of pores in the catalyst layers 2 and 3 and may achieve high output performance.

The fibrous substances 16 included in the catalyst layers 2 and 3 are preferably contained within the range of 0.1 times or more and 2.0 times or less the mass of the carbon particles 14 excluding the mass of the catalyst particles 13. An excessively low content of the fibrous substances 16 may significantly decrease the durability after the bending test, and an excessively high content of the fibrous substances 16 may deteriorate the power generation performance.

The thickness of the catalyst layers 2 and 3 is preferably in the range of 5 µm or more and 30 µm or less, and more preferably in the range of 10 µm or more and 20 µm or less. If the thickness of the catalyst layers 2 and 3 is less than 5 µm, flooding may occur, resulting in a decrease in the output, and if the thickness of the catalyst layers 2 and 3 is greater than 30 µm, the resistance of the catalyst layers 2 and 3 may be increased, which may decrease the output.

The density of the catalyst layers 2 and 3 is preferably in the range of 400 mg/cm³ or more and 1000 mg/cm³ or less, and more preferably in the range of 600 mg/cm³ or more and 900 mg/cm³ or less. If the density of the catalyst layers is less than 400 mg/cm³, the amount of the catalyst per unit volume is reduced, which may deteriorate the power generation performance. If the density is low, the distance between the carbon particles 14, the polymer electrolyte 15, and the fibrous substances 16 is increased, so that the structure of the catalyst layers becomes susceptible to damage, which may decrease the durability. If the density is greater than 1000 mg/cm³, the structure of the catalyst layers 2 and 3 becomes dense, which decreases the performance in the drainage and the gas diffusion. This may deteriorate the power generation performance during a high-output operation. If the density of the catalyst layers is high, flexibility may be lost.

The porosity of the catalyst layers 2 and 3 is preferably in the range of 55% or more and 85% or less, and more preferably in the range of 60% or more and 80% or less. If the porosity is less than 55%, the catalyst particles 13 approach each other more closely, which tends to cause aggregation of the catalyst particles during power generation, resulting in decrease in durability. Additionally, stress due to impact on the catalyst layers may fail to be reduced, which may result in damaging the membrane electrode assembly. A porosity greater than 85% increases the transfer distance of the protons and the electrons moving in the catalyst layers 2 and 3. This increases the resistance and may result in deteriorating the power generation performance. Since the catalyst layers 2 and 3 also become susceptible to crushing, flexibility may be lost, which may cause cracks to be easily formed. In this description, the "porosity" refers to the percentage of the volume of the pores having a diameter of 3 nm or more and 5.5 µm or less contained in at least one of the catalyst layer 2 and the catalyst layer 3 of the membrane electrode assembly 12 to the volume of that catalyst layer.

### (Method of Producing Catalyst Layers)

The catalyst layers 2 and 3 may each be produced by preparing a catalyst-layer slurry and applying the prepared catalyst-layer slurry to substrates or the polymer electrolyte membrane 1, followed by drying.

The catalyst-layer slurry includes the catalyst particles 13, the carbon particles 14, the polymer electrolyte 15, the fibrous substances 16, and a solvent. The solvent is not particularly limited but is preferred to be a solvent that can disperse or dissolve the polymer electrolyte 15. Examples of a typically used solvent include water; alcohols such as methanol, ethanol, 1-propanol, 2-propanol, 1-butanol, 2-butanol, isobutyl alcohol, and tert-butyl alcohol; ketones such as acetone, methyl ethyl ketone, methyl propyl ketone, methyl butyl ketone, methyl isobutyl ketone, methyl amyl ketone, pentanone, heptanone, cyclohexanone, methyl cyclohexanone, acetonylacetone, diethylketone, dipropyl ketone, and diisobutyl ketone; ethers such as tetrahydrofuran, tetrahydropyran, dioxane, diethylene glycol dimethylether, anisole, methoxy toluene, diethylether, dipropylether, and dibutylether; amines such as isopropylamine, butylamine, isobutylamine, cyclohexylamine, diethylamine, and aniline; esters such as propyl formate, isobutyl formate, amyl formate, methyl acetate, ethyl acetate, propyl acetate, butyl acetate, isobutyl acetate, pentyl acetate, isopentyl acetate, methyl propionate, ethyl propionate, and butyl propionate; other acetic acids, propionic acid, dimethylformamide, dimethylacetamide, and N-methylpyrrolidone. Glycols or glycol ether solvents may include, for example, ethylene glycol, diethylene glycol, propylene glycol, ethylene glycol monomethylether, ethylene glycol dimethylether, ethylene glycol diethylether, diacetone alcohol, 1-methoxy-2-propanol, and 1-ethoxy-2-propanol.

The solid content concentration of the catalyst-layer slurry is preferably in the range of 5% by mass or more and 30% by mass or less, more preferably in the range of 8% by mass or more and 20% by mass or less. If the concentration is too low, that is, if the concentration is less than 5% by mass, the viscosity of the slurry is decreased, so that the amount of application becomes uneven. If the concentration is too high, that is, if the concentration exceeds 30% by mass, the viscosity of the slurry is increased, so that the appearance of the applied catalyst layers may deteriorate.

The method of applying the catalyst-layer slurry is not particularly limited but may be, for example, doctor blading, die coating, dipping, screen printing, laminator roll coating, or spraying.

The method of drying the catalyst-layer slurry may be, for example, hot-air drying or IR drying. The drying temperature is preferably in the range of 40°C or more and 200°C or less, and more preferably in the range of 40°C or more and 120°C or less. If the drying temperature is too low, the solvent does not volatilize, and if the drying temperature is too high, the catalyst-layer slurry has a risk of catching fire.

The drying time of the catalyst-layer slurry is preferably in the range of 0.5 minutes or more and 1 hour or less, and more preferably in the range of 1 minute or more and 30 minutes or less. If the drying time is too short, residual solvent may remain, and if the drying time is too long, the polymer electrolyte membrane 1 may possibly deform due to drying.

### (Method of Producing Membrane Electrode Assembly)

The method of producing the membrane electrode assembly 12 may include, for example, forming the catalyst layers 2 and 3 on transfer substrates or the gas diffusion layers 4 and 5 and then thermally pressing them against the polymer electrolyte membrane 1 to thereby form the catalyst layers 2 and 3 on the polymer electrolyte membrane 1, or forming the catalyst layers 2 and 3 directly on the polymer electrolyte membrane 1. The method of directly forming the catalyst layers 2 and 3 on the polymer electrolyte membrane 1 is preferred because high adhesion is achieved between the polymer electrolyte membrane 1 and the catalyst layers 2 and 3, and there is no risk of crushing the catalyst layers 2 and 3.

The membrane electrode assembly 12, which resists formation of cracks after the bending test, is achieved by optimizing the composition and the application and drying conditions of the catalyst-layer slurry and the structure of the catalyst layer. For example, the orientation of the fibrous substances 16 included in the catalyst layers 2 and 3 is made substantially parallel to the polymer electrolyte membrane 1, so that the degree of entanglement between fibrous substances in the plane direction is increased. This resists formation of cracks. In this description, "plane direction" refers to a direction perpendicular to the thickness direction of the catalyst layer.

### [Examples]

Next, examples based on the present invention are illustrated.

### [Bending Test]

The bending test was conducted using an MIT folding endurance tester (MIT-S, manufactured by Toyo Seiki Seisaku-sho, Ltd.). Specimens were prepared as follows. A membrane electrode assembly having catalyst layers that are 50 mm square is cut out to have a width of 15.0 ±1 mm and a length of approximately 110 mm in such a manner that the catalyst layers come to the center. The test was conducted in accordance with JIS P 8115 (International Organization for Standardization: ISO 5256) except that the load was set to 0.30 kgf, and the number of times of folding was set to be up to 200 times.

Although JIS P 8115 is a standard applied to paper and board, it was applied to the membrane electrode assembly.

The test conditions are described below.

Test Conditions
Load: 0.30 kgf (= 2.94 N)
Folding Angle: ±135°
Folding Speed: 175 cpm
Folding Clamp
Radius of Curvature of Head: R = 0.38 ±0.02 mm
Clamping thickness: 0.25 mm

The operation included placing the folding device to be horizontal and adjusting the orientation so that the folding clamp is vertical. A load (0.30 kgf) appropriate for measuring the specimen was applied to a plunger of a spring-loaded clamp. The plunger was held at that position and was secured with a screw. The specimen was attached to upper and lower clamps so that the specimen was completely on a plane. In attaching the specimen, both ends of the specimen were held so as not to touch the folding section, and care was taken not to touch the folding device. The folding clamp at the lower section includes folding surfaces each having a radius of curvature of 0.38 ±0.02 mm.

Subsequently, the retaining screw on the plunger was loosened gently to apply load on the specimen. If the reading on a load indicator changed, a predetermined load was applied again, and the specimen was attached again. The specimen was folded to the left and right with respect to the vertical line at an angle of 135 ±2° at a speed of 175 ±10 times per minute. When the counter recorded 200 times of folding back and forth, the device was stopped.

### [Evaluation of Cracks]

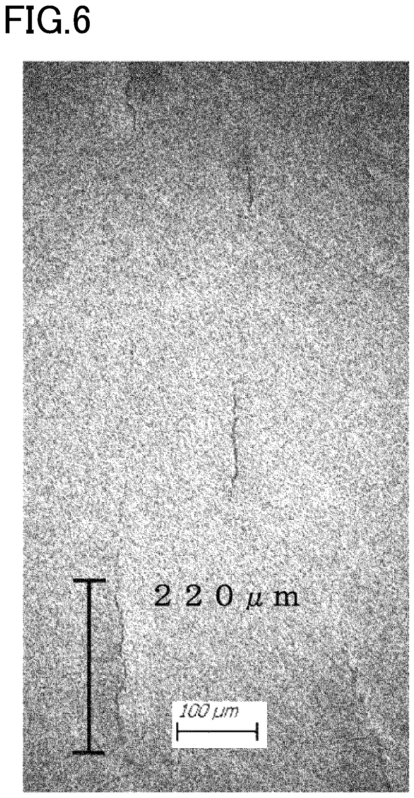

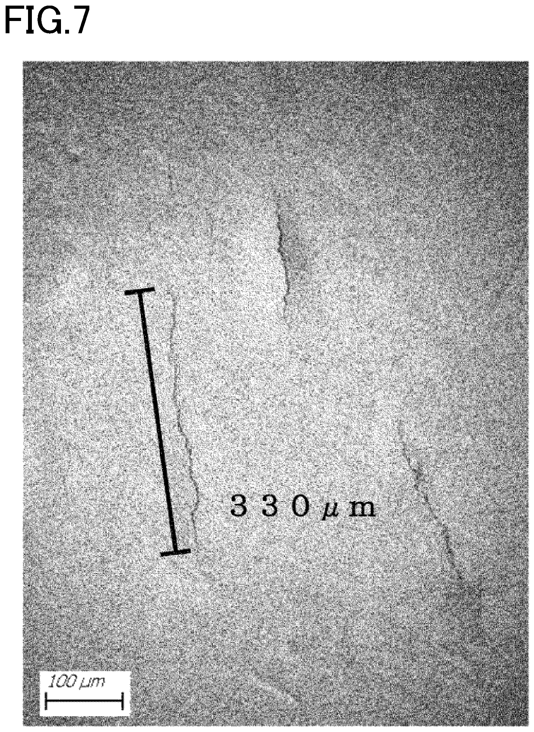

The surface of the membrane electrode assembly was observed using a scanning electron microscope (SIGMA500 manufactured by Carl Zeiss Microscopy GmbH). InLens Duo was used as a sensor to observe with a Grid of 0V, an acceleration voltage of 1.0 kV, and a magnification of 80 times. The blightness was set to 57%, and the contrast was set to 40%. The length of the longest crack, that is, the maximum length of the cracks, was calculated from the obtained micrograph. The maximum length of the cracks in Fig. 6 was 220 µm, and the maximum length of the cracks in Fig. 7 was 330 µm. The cracks were observed before and after the bending test to calculate the difference between the maximum lengths of the cracks.

### [Definition of Crack]

The cracks refer to those that have a width of 0.5 µm or more in the catalyst layer. The length of the crack was defined as the length of a straight line connecting both ends of the crack. The width and the ends of the cracks were observed with the magnification increased to 5000 times. Cracks having a width of less than or equal to 0.5 µm in the middle are regarded as different cracks if the width is less than 0.5 µm continuously over 5 µm.

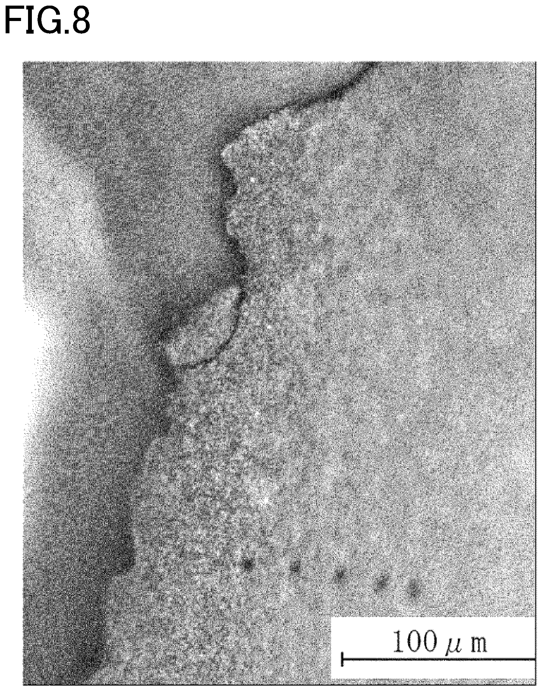

Samples in which the catalyst layer was broken during the bending test were observed to check the occurrence of the breakage with the optical microscope as in Fig. 8, and the length of the crack was recorded as 1500000 µm.

### [Calculation of Density]

The density was obtained from the mass and the thickness of the catalyst layers 2 and 3. The mass of the catalyst layers 2 and 3 was represented by the mass or the dry mass obtained from the application amount of the catalyst-layer slurry. To obtain the mass of the catalyst layers 2 and 3 from the application amount, the solid content (mass %) of the catalyst-layer slurry was previously obtained, and the mass of the catalyst layers 2 and 3 was obtained from the predetermined application amount and the solid content mass. To obtain the mass of the catalyst layers 2 and 3 from the dry mass, the catalyst layers 2 and 3 were processed into a predetermined size, and their mass was measured. The thickness of the catalyst layers 2 and 3 was measured by observing the cross-section with the scanning electron microscope (SIGMA500 manufactured by Carl Zeiss Microscopy GmbH), and the mean thickness was obtained.

### [Measurement of Porosity]

The distribution of the pore volume Vp necessary for calculating the porosity was measured by mercury intrusion. More specifically, a membrane electrode assembly that is substantially 25 square cm was prepared, and the pore volume Vp was measured using an automated porosimeter (AutoPore IV9510 manufactured by Micromeritics Instrument Corporation). The volume of the measured cell was approximately 5 cm³, and the pressure of the mercury intrusion was increased from 3kPa to 400 MPa. Through this process, the intrusion amount of mercury at each pressure, that is, the pore volume Vp, was obtained. The pressure of the mercury intrusion was converted to the pore diameter D using Washburn's equation, and a plot of the distribution function dVp/dlogD (Log differential pore volume distribution) of the pore volume Vp to the pore diameter D was prepared. The surface tension γ was set to 0.48 N/m, and the contact angle θ was set to 130°. The pore diameter D corresponding to the peak of the plot was read as the pore diameter Dp.

The volumes (Log differential pore volumes) of all pores having a pore diameter D of 3 nm or more and 5.5 µm or less were integrated to calculate a cumulative pore volume V. The area and the thickness of the membrane electrode assembly used for measurement by the automated porosimeter were multiplied to calculate the geometric volume of the membrane electrode assembly. Furthermore, the area of the membrane electrode assembly and the thickness of the polymer electrolyte membrane used for measurement by the automated porosimeter were multiplied to calculate the volume of the polymer electrolyte membrane. The volume of the polymer electrolyte membrane was subtracted from the volume of the membrane electrode assembly to calculate the geometric volume Vo of the electrode catalyst layers. The percentage (V/Vo) of the cumulative pore volume V to the geometric volume Vo of the electrode catalyst layers was calculated. The porosity refers to this percentage (V/Vo).

### [Evaluation of Power Generation Performance]

Gas diffusion layers (SIGRACET (registered trademark) 35BC manufactured by SGL Carbon) were placed on the outside of the respective catalyst layers 2, 3, and the power generation performance was evaluated using a commercially available JARI standard cell. The cell temperature was set to 80°C, and hydrogen (100% RH) and air (100% RH) were respectively supplied to the anode and the cathode.

### [Evaluation of Durability]

Gas diffusion layers (SIGRACET (registered trademark) 39BC manufactured by SGL Carbon) were placed on the outside of the respective catalyst layers 2 and 3, and the durability was evaluated by a humidity cycle test using a commercially available JARI standard cell. The evaluation was conducted in accordance with the protocol (Cell Evaluation and Analysis Protocol, December 2012) established by New Energy and Industrial Technology Development Organization. With the cell temperature set to 80°C, nitrogen was supplied to the anode and the cathode, and the humidity was set to 150% RH and 0% RH and was kept for 2 minutes each.

### [Example 1]

The catalyst-layer slurry was obtained by placing 20 g of carbon-supported platinum (TEC10E50E manufactured by Tanaka Kikinzoku Kogyo K.K.) in a container, and then adding and mixing 150 g of water, followed by adding 150 g of 1-propanol, 10 g of a polymer electrolyte (dispersion of Nafion (registered trademark) manufactured by Wako Pure Chemical Industries Co., Ltd.), and 5 g of carbon nanofibers (VGCF-H (product name) manufactured by Showa Denko K.K. with a fiber diameter of approximately 150 nm and a fiber length of approximately 10 µm) as the fibrous substances, further followed by stirring. Among 20 g of carbon-supported platinum used in the present example, the carbon component was 10 g.

The membrane electrode assembly for a polymer electrolyte fuel cell of Example 1 was made by applying the obtained catalyst-layer slurry to both sides of the polymer electrolyte membrane (Nafion 212 manufactured by Du Pont) by die coating so that the thickness of the catalyst layers after drying becomes 20 µm and then drying it in an oven at 80°C.

### [Example 2]

The membrane electrode assembly for a polymer electrolyte fuel cell of Example 2 was made by the same procedure as in Example 1 except that 2g of carbon nanotubes (NC7000 (product name) manufactured by Nanocyl SA. with a fiber diameter of approximately 9.5 nm and a fiber length of approximately 1.5 µm) were used as the fibrous substances. In Example 2, the catalyst-layer slurry was applied so that the thickness of the catalyst layers after drying becomes 25 µm.

### [Example 3]

The membrane electrode assembly for a polymer electrolyte fuel cell of Example 3 was made by the same procedure as in Example 1 except that 0.5 g of cellulose nanofibers (with a fiber diameter of approximately 4 nm and a fiber length of approximately 300 nm) made by a known method from a softwood kraft pulp were used as the fibrous substances. In Example 3, the catalyst-layer slurry was applied so that the thickness of the catalyst layers after drying becomes 20 µm.

### [Example 4]

The membrane electrode assembly for a polymer electrolyte fuel cell according to Example 4 was made by the same procedure as in Example 1 except that the amount of the fibrous substances applied was changed to 0.5 g. In Example 4, the catalyst-layer slurry was applied so that the thickness of the catalyst layers after drying becomes 10 µm.

### [Example 5]

The membrane electrode assembly for a polymer electrolyte fuel cell according to Example 5 was made by the same procedure as in Example 1 except that the amount of the fibrous substances applied was changed to 1 g. In Example 5, the catalyst-layer slurry was applied so that the thickness of the catalyst layers after drying becomes 12 µm.

### [Example 6]

The membrane electrode assembly for a polymer electrolyte fuel cell according to Example 6 was made by the same procedure as in Example 1 except that the amount of the fibrous substances applied was changed to 20 g. In Example 6, the catalyst-layer slurry was applied so that the thickness of the catalyst layers after drying becomes 25 µm.

### [Example 7]

The membrane electrode assembly for a polymer electrolyte fuel cell according to Example 7 was made by the same procedure as in Example 1 except that the amount of the fibrous substances applied was changed to 30 g. In Example 7, the catalyst-layer slurry was applied so that the thickness of the catalyst layers after drying becomes 30 µm.

### [Example 8]

The membrane electrode assembly for a polymer electrolyte fuel cell according to Example 8 was made by the same procedure as in Example 1 except that the catalyst-layer slurry was applied so that the thickness of the catalyst layers after drying becomes 15 µm.

### [Example 9]

The membrane electrode assembly for a polymer electrolyte fuel cell according to Example 9 was made by the same procedure as in Example 1 except that the catalyst-layer slurry was applied so that the thickness of the catalyst layers after drying becomes 10 µm.

### [Example 10]

The membrane electrode assembly for a polymer electrolyte fuel cell according to Example 10 was made by the same procedure as in Example 1 except that the amount of the polymer electrolyte applied was changed to 5 g.

### [Example 11]

The membrane electrode assembly for a polymer electrolyte fuel cell according to Example 11 was made by the same procedure as in Example 1 except that the amount of the polymer electrolyte applied was changed to 18 g.

### [Example 12]

The membrane electrode assembly for a polymer electrolyte fuel cell according to Example 12 was made by the same procedure as in Example 1 except that the amount of the polymer electrolyte applied was changed to 4 g.

### [Example 13]

The membrane electrode assembly for a polymer electrolyte fuel cell according to Example 13 was made by the same procedure as in Example 1 except that the amount of the polymer electrolyte applied was changed to 20 g.

### [Example 14]

The membrane electrode assembly for a polymer electrolyte fuel cell according to Example 14 was made by the same procedure as in Example 1 except that the catalyst-layer slurry was applied so that the density of the catalyst layers after drying becomes 400 g/cm³ or less, and the thickness of the catalyst layers after drying becomes 40 µm.

### [Example 15]

The membrane electrode assembly for a polymer electrolyte fuel cell according to Example 15 was made by the same procedure as in Example 1 except that the catalyst-layer slurry was applied so that the density of the catalyst layers after drying becomes 1000 g/cm³ or more, and the thickness of the catalyst layers after drying becomes 8 µm.

### [Example 16]

The membrane electrode assembly for a polymer electrolyte fuel cell according to Example 16 was made by the same procedure as in Example 1 except that the catalyst-layer slurry was subjected to a defoaming process before application. In Example 16, the catalyst-layer slurry was applied so that the thickness of the catalyst layers after drying becomes 15 µm.

### [Example 17]

The membrane electrode assembly for a polymer electrolyte fuel cell according to Example 17 was made by the same procedure as in Example 1 except that the catalyst-layer slurry was subjected to a stirring process for aeration before application. In Example 16, the catalyst-layer slurry was applied so that the thickness of the catalyst layers after drying becomes 25 µm.

### [Example 18]

The catalyst-layer slurry was obtained by placing 20 g of carbon-supported platinum (TEC10E50E manufactured by Tanaka Kikinzoku Kogyo K.K.) in a container, and then adding and mixing 150 g of water, followed by adding 150 g of 1-propanol, 10 g of a polymer electrolyte (dispersion of Nafion (registered trademark) manufactured by Wako Pure Chemical Industries Co., Ltd.), and 5 g of carbon nanofibers (VGCF-H (product name) manufactured by Showa Denko K.K. with a fiber diameter of approximately 150 nm and a fiber length of approximately 10 µm) as the fibrous substances, further followed by stirring. Among 20 g of carbon-supported platinum used in the present example, the carbon component was 10 g.

The obtained catalyst-layer slurry was applied to a PET film by die coating so that the thickness of the catalyst layers after drying becomes 20 µm, which was then dried in an oven at 80°C to obtain the catalyst layer. The membrane electrode assembly for a polymer electrolyte fuel cell according to Example 18 was made by producing two catalyst layers as described above and sandwiching the polymer electrolyte membrane (Nafion 212 made by DuPont) by the catalyst layers, which were then transferred by thermal compression bonding.

### [Example 19]

The membrane electrode assembly for a polymer electrolyte fuel cell according to Example 19 was made by the same procedure as in Example 18 except that the amount of the fibrous substances applied was changed to 20 g. In Example 19, the catalyst-layer slurry was applied so that the thickness of the catalyst layers after drying becomes 25 µm.

### [Comparative Example 1]

The membrane electrode assembly for a polymer electrolyte fuel cell according to Comparative Example 1 was made by the same procedure as in Example 1 except that 5 g of a plate-shaped substance, that is, graphene (with a thickness of approximately 15 µm and a lateral width of approximately 5 µm), was added instead of the fibrous substances. In Comparative Example 1, the catalyst-layer slurry was applied so that the thickness of the catalyst layers after drying becomes 20 µm.

### [Comparative Example 2]

The membrane electrode assembly for a polymer electrolyte fuel cell according to Comparative Example 2 was made by the same procedure as in Example 1 except that the fibrous substances were not added. In Comparative Example 2, the catalyst-layer slurry was applied so that the thickness of the catalyst layers after drying becomes 10 µm.

### [Comparative Example 3]

The membrane electrode assembly for a polymer electrolyte fuel cell according to Comparative Example 3 was made by the same procedure as in Example 18 except that the amount of the fibrous substances applied was changed to 0.5 g. In Comparative Example 3, the catalyst-layer slurry was applied so that the thickness of the catalyst layers after drying becomes 10 µm.

### [Comparative Example 4]

The membrane electrode assembly for a polymer electrolyte fuel cell according to Comparative Example 4 was made by the same procedure as in Example 18 except that the fibrous substances were not added. In Comparative Example 4, the catalyst-layer slurry was applied so that the thickness of the catalyst layers after drying becomes 10 µm.

### [Comparative Example 5]

The membrane electrode assembly for a polymer electrolyte fuel cell according to Comparative Example 5 was made by the same procedure as in Example 18 except that the catalyst-layer slurry was applied so that the thickness of the catalyst layers after drying becomes 10 µm.

The catalyst layers according to Examples 1 to 19 and Comparative Examples 1 to 5 were evaluated for each of the bending test, power generation performance, flexibility, and durability. Table 1 shows the results.

**[Table 1]**

| | Fibrous substances [mass ratio with respect to carbon particles] | Polymer electrolyte [mass ratio with respect to carbon particles] | Thickness of catalyst layer [µm] | Density [g/cm³] | Porosity [%] | Crack length before bending test [µm] | Crack length after bending test [µm] | Difference before and after bending test [µm] | Power generation performance | Flexibility | Durability | Evaluation |
|---|---|---|---|---|---|---|---|---|---|---|---|---|
| Example 1 | 0.5 | 1 | 20 | 839 | 71 | 0 | 0 | 0 | Excellent | Excellent | Excellent | Excellent |
| Example 2 | 0.2 | 1 | 25 | 622 | 62 | 30 | 500 | 470 | Fair | Good | Fair | Fair |
| Example 3 | 0.05 | 1 | 20 | 562 | 56 | 80 | 710 | 630 | Excellent | Fair | Fair | Fair |
| Example 4 | 0.05 | 1 | 10 | 581 | 57 | 50 | 920 | 870 | Good | Fair | Fair | Fair |
| Example 5 | 0.1 | 1 | 12 | 753 | 66 | 10 | 530 | 520 | Good | Fair | Good | Fair |
| Example 6 | 2 | 1 | 25 | 940 | 80 | 0 | 0 | 0 | Good | Excellent | Good | Good |
| Example 7 | 3 | 1 | 30 | 1109 | 86 | 0 | 0 | 0 | Fair | Excellent | Good | Fair |
| Example 8 | 0.5 | 1 | 15 | 852 | 70 | 0 | 280 | 280 | Excellent | Good | Good | Good |
| Example 9 | 0.5 | 1 | 10 | 884 | 71 | 0 | 390 | 390 | Good | Good | Good | Good |
| Example 10 | 0.5 | 0.5 | 20 | 716 | 75 | 0 | 420 | 420 | Good | Good | Good | Good |
| Example 11 | 0.5 | 1.8 | 20 | 952 | 62 | 0 | 0 | 0 | Good | Good | Good | Good |
| Example 12 | 0.5 | 0.4 | 20 | 689 | 78 | 20 | 540 | 520 | Fair | Good | Excellent | Fair |
| Example 13 | 0.5 | 2 | 20 | 985 | 61 | 0 | 150 | 150 | Fair | Good | Good | Fair |
| Example 14 | 0.5 | 1 | 40 | 374 | 62 | 0 | 960 | 960 | Fair | Fair | Good | Fair |
| Example 15 | 0.5 | 1 | 8 | 1087 | 79 | 30 | 540 | 510 | Fair | Good | Good | Fair |
| Example 16 | 0.5 | 1 | 15 | 426 | 54 | 0 | 1100 | 1100 | Good | Fair | Fair | Fair |
| Example 17 | 0.5 | 1 | 25 | 975 | 87 | 50 | 1200 | 1150 | Fair | Fair | Good | Fair |
| Example 18 | 0.5 | 1 | 20 | 930 | 56 | 0 | 490 | 490 | Good | Good | Fair | Fair |
| Example 19 | 2 | 1 | 25 | 939 | 62 | 0 | 330 | 330 | Good | Good | Good | Good |
| Comparative Example 1 | 0 | 1 | 20 | 1051 | 63 | 460 | 2300 | 1840 | Good | Poor | Poor | Poor |
| Comparative Example 2 | 0 | 1 | 10 | 1126 | 54 | 760 | 32000 | 31240 | Excellent | Poor | Poor | Poor |
| Comparative Example 3 | 0.05 | 1 | 10 | 1008 | 52 | 0 | 1500000 | 1500000 | Good | Poor | Poor | Poor |
| Comparative Example 4 | 0 | 1 | 10 | 1043 | 51 | 0 | 1500000 | 1500000 | Good | Poor | Poor | Poor |
| Comparative Example 5 | 0.5 | 1 | 10 | 943 | 68 | 0 | 1500000 | 1500000 | Good | Poor | Poor | Poor |

"Power generation performance" was evaluated based on the following criteria. When the current value is 1.0 A/cm², the evaluation is as follows.
Excellent: Voltage is 0.61 V or more
Good: Voltage is 0.58 V or more
Fair: Voltage is 0.55 V or more
Poor: Voltage is less than 0.55
Even if the evaluation is "Poor", there is no problem in practical use.

"Flexibility" was evaluated based on the following criteria.
Excellent: No cracks
Good: The difference between the maximum lengths of cracks before and after the bending test is 600 µm or less.
Fair: The difference between the maximum lengths of cracks before and after the bending test is 1200 µm or less.
Poor: The difference between the maximum lengths of cracks before and after the bending test exceeds 1200 µm.
Even if the evaluation is "Poor", there is no problem in practical use.

"Durability" was evaluated based on the following criteria.
Excellent: 20001 cycles or more
Good: 10001 to 20000 cycles
Fair: 5001 to 10000 cycles
Poor: 5000 cycles or less
Even if the evaluation is "Poor", there is no problem in practical use.

"Evaluation (Overall evaluation)" was evaluated based on the following criteria.
Excellent: Two or more "Excellent" and no "Fair" or "Poor" in evaluations of "Power generation performance", "Flexibility", and "Durability"
Good: Two or more "Good" and no "Fair" or "Poor" in evaluations of "Power generation performance", "Flexibility", and "Durability"
Fair: One or more "Fair" and no "Poor" in evaluations of "Power generation performance", "Flexibility", and "Durability"
Poor: One or more "Poor" in evaluations of "Power generation performance", "Flexibility", and "Durability"
Even if the evaluation is "Poor", there is no problem in practical use.

As shown in Table 1, if the fibrous substances are contained, the crack length (the maximum length of cracks) tends to become short. As the added amount of the fibrous substances are increased, the crack length tends to become short. The crack length tends to become short when the membrane electrode assembly is made by die coating compared with a case in which the membrane electrode assembly is made by thermal compression bonding. This is because when the catalyst layers are made by die coating, many pores are formed, so that stress applied to the catalyst layers due to bending is reduced.

When the fibrous substances are changed from carbon fibers to cellulose nanofibers, the flexibility was decreased. This is probably because decrease in the fiber length of the fibrous substances causes a decrease in the flexibility of the catalyst layer. When the fibrous substances were changed from carbon fibers to carbon nanotubes, the same tendency was observed. The power generation performance, which is important in the membrane electrode assembly, was significantly low when cellulose nanofibers, which are polymer fibers, were used compared with a case in which carbon nanofibers or carbon nanotubes, which are carbon fibers, were used. As described above, this is probably caused by the difference in the conductivity of the fibrous substances.

The catalyst layer broke when the fibrous substances were not added, or when the mass of the fibrous substances to the carbon particles was less than 0.1, and, additionally, the membrane electrode assembly was made by thermal compression bonding.

When the thickness of the catalyst layers was decreased, no cracks were formed in the membrane electrode assembly made by die coating, but the size of the cracks increased in the membrane electrode assembly made by thermal compression bonding. This is because when the catalyst layers are thin, stress applied to the catalyst layers is reduced significantly by the pores.

As shown in Examples 1 and 10 to 13, the performance of the membrane electrode assembly is optimized by the amount of the polymer electrolyte to be added. Similarly, Example 1 and Examples 14 to 17 show the results of the cases in which the density and the porosity were adjusted. The performance of the membrane electrode assembly was optimized in each case.

Fig. 6 shows an electron micrograph of the membrane electrode assembly after the bending test according to Example 1, and Fig. 7 shows that of Example 19. Fig. 8 shows a micrograph of the membrane electrode assembly after the bending test according to Comparative Example 5. In Example 1, a 220 µm crack was observed. In Example 19, a 330 µm crack was observed. In Comparative Example 5, since the catalyst layer broke, the length of the crack was recorded as 1500000 µm.

As shown in Table 1, the durability was high in Examples 1 to 19 in which the difference in the crack length before and after the bending test was small, that is, the flexibility of the catalyst layers was high. The durability was low in Comparative Examples 1 to 5 in which the difference in the crack length was large, that is, the flexibility of the catalyst layers was low.

As described above, according to the present embodiment, cracks are unlikely to be formed in the membrane electrode assembly after the bending test is conducted, that is, the flexibility of the membrane electrode assembly is improved. Consequently, a highly durable catalyst layer for a polymer electrolyte fuel cell is provided.

### [Industrial Applicability]

The present invention may be extremely suitable for being applied to, for example, a polymer electrolyte fuel cell.

### [Reference Signs List]

- 1: Polymer electrolyte membrane
- 2: Cathode-side catalyst layer
- 3: Anode-side catalyst layer
- 4: Cathode-side gas diffusion layer
- 5: Anode-side gas diffusion layer
- 6: Cathode
- 7: Anode
- 8: Gas passage
- 9: Coolant flow passage
- 10: Separator
- 11: Single cell
- 12: Membrane electrode assembly
- 13: Catalytic substance
- 14: Carbon particle
- 15: Polymer electrolyte
- 16: Fibrous substance
- 17: Spring-loaded clamp
- 18: Bending clamp
- 19: Crack

## Claims

1. A membrane electrode assembly for a polymer electrolyte fuel cell in which a proton-conducting polymer electrolyte membrane is sandwiched between an anode-side catalyst layer and a cathode-side catalyst layer each of which includes carbon particles supporting catalyst particles, a polymer electrolyte, fibrous substances, the membrane electrode assembly being **characterized in that**,
a difference between maximum lengths of cracks formed in the catalyst layers before and after a bending test is 1200 µm or less.

2. The membrane electrode assembly according to claim 1, **characterized in that** the maximum length of the cracks formed in the catalyst layers is 1500 µm or less after the bending test of the membrane electrode assembly.

3. The membrane electrode assembly according to claim 1 or 2, **characterized in that** the fibrous substances include at least one of carbon fibers, transition metal elements, partially-oxidized transition metal carbonitrides, conductive oxides of transition metal elements, conductive oxynitrides of transition metal elements, and proton-conducting polymer electrolyte fibers.

4. The membrane electrode assembly according to any one of claims 1 to 3, **characterized in that** the fibrous substances are contained in a range of 0. 1 times or more and 2.0 times or less a mass of the carbon particles excluding a mass of the catalyst particles.

5. The membrane electrode assembly according to any one of claims 1 to 4, **characterized in that** a mass ratio (polymer electrolyte/carbon particles) of the polymer electrolyte to the carbon particles contained in the catalyst layers is 0.4 times or more and 1.8 times or less.

6. The membrane electrode assembly according to any one of claims 1 to 5, **characterized in that** a density of at least one of the anode-side catalyst layer and the cathode-side catalyst layer is 400 mg/cm³ or more and 1000 mg/cm³ or less.

7. The membrane electrode assembly according to any one of claims 1 to 6, **characterized in that** a porosity is 55% or more and 85% or less, the porosity being a percentage of a volume of pores having a diameter of 3 nm or more and 5.5 µm or less contained in at least one of the anode-side catalyst layer and the cathode-side catalyst layer of the membrane electrode assembly to a volume of that catalyst layer.
